# EUROPEAN PATENT APPLICATION

(11) **EP 3 957 562 A1**
(43) Date of publication of application: **23.02.2022**
(21) Application number: 21191638.2
(22) Date of filing: 17.08.2021
(51) Int. Cl.: B64C 39/02, B64D 9/00, B64F 1/32

(54) **METHOD FOR AUTOMATIC LOADING AND UNLOADING OF SHIPMENTS IN AN UNMANNED AIRCRAFT AND MECHANISM FOR AUTOMATIC LOADING AND UNLOADING OF SHIPMENTS IN AN UNMANNED AIRCRAFT**

(30) Priority: 17.08.2020 PL 43498620
(71) Applicant: Cervi Robotics Sp. z.o.o., 36-002 Jasionka (PL)
(72) Inventor: MELNYK, Vadym, 02-972 Warszawa (PL)
(74) Representative: Jedrzejewski, Michal

(57) **Abstract**

A method of automatically loading and unloading cargo in an unmanned aerial vehicle, characteristic in that the load is placed inside the transport container (1) for loading; subsequently, the transport container is inserted (1) into the transport trough (10) once it is in the loading position and insertion is confirmed by pressing a button, while the transport trough (10) travels along the x-axis to the unloading position through the feeder guides (13) and the pneumatic actuator (12), and then the manipulator (14) approaches and pushes the spindles (7) into the locking ratchets and the locking ratchets (9) are locked by the rotary motion of the spindles (7), caused by the drive motor for rotating the rollers (3), and the manipulator (4) lifts the transport container (1) by travelling along the z-axis and then it moves away from the feeder by travelling along the y-axis.

A mechanism for automatically loading and unloading cargo in an unmanned aerial vehicle having a transport container, characteristic in that locking ratchets (9) and guide rails of the transport container (16) are attached to the transport container (1), while the transport container (1) is placed is on the transport trough (10) having strain gauge beams (11) and feeder guides (13), wherein the mechanism also has a manipulator (14) consisting of a manipulator arm (17), a spindle (7), and a set of tensioners (4), a drive belt (5), encoder discs (6), roller position encoders (2) and a drive motor for rotating the rollers (3), with the unmanned aerial vehicle (15) having a transport container slot (18).

## Description

The present invention relates to a method of automatically loading and unloading cargo in an unmanned aerial vehicle and a mechanism for automatically loading and unloading cargo in an unmanned aerial vehicle. The invention can be used in the field of air transport.

Patent document no. US 9957048 discloses a delivery vehicle housing an unmanned aerial vehicle (UAV) and a loading robot. The system comprises unmanned aerial vehicles that assist the carrier's staff by reducing the physical demands of the transport and delivery process. The UAV consists of a chassis containing an upper section, drive components configured to lift the UAV chassis, and a package conveyor configured to be selectively coupled with and detached from the UAV chassis. The UAV support mechanisms are used to load and unload package transporters onto the UAV chassis, whereas the UAV lands on and takes off from the UAV support mechanism in order to deliver packages to their place of destination. The UAV comprises computing units that cooperate with various systems and computing units to transmit and receive various types of information.
Patent application no. EP3412569 discloses the system and method of cargo delivery. The invention provides an improved system for cargo and/or passenger transport, comprising one or more base stations and one or more aerial vehicles, preferably unmanned aerial vehicles (UAVs), for transporting cargo and/or passengers, wherein the aerial vehicle contains a load module (detachably connected to the aerial vehicle and detachably contained in the frame which is itself housed within the aerial vehicle) adapted to contain cargo and/or passengers in one or more load compartments, wherein the home station contains an elevated docking station for docking one or more aerial vehicles, wherein the home station furthermore includes a receiving station for receiving cargo and/or passengers, which is separated from the docking station by distance; the home station furthermore contains a means of transport to connect the docking and receiving stations, wherein the docking station is adapted to establish a physical connection with the aerial vehicle and firmly secure such connection, wherein the docking station is adapted to subsequently establish a physical connection with the load module.
In the case of previously disclosed solutions for transporting cargo by unmanned aerial vehicles, the problem is the need for human involvement to load cargo to be transported in an unmanned aerial vehicle. This problem has been resolved by the invention.

A method of automatically loading and unloading cargo in an unmanned aerial vehicle, characteristic in that the load is placed inside the transport container for loading. When the transport trough is in the loading position, the transport container is inserted in the transport trough and insertion is confirmed by pressing a button. The transport trough travels along the x-axis to the loading position thanks to feeder guides and a pneumatic actuator, whereupon the manipulator approaches and inserts spindles into locking ratchets which are then locked by the rotary motion of the spindles, caused by the drive motor for rotating the rollers. The manipulator lifts the transport container by travelling along the z-axis, and then travels along the y-axis to move away from the feeder. As the next step, the manipulator adjusts its position along the x- and z-axes and - by travelling along the y-axis - places the transport container inside the transport container slot, and the locking ratchets are released by the rotary motion of the spindles, caused by the drive motor for rotating the rollers. The manipulator moves away from the unmanned aerial vehicle by travelling along the y-axis. For unloading, the manipulator adjusts its position along the x- and z-axes, and then, by travelling along the y-axis, inserts the spindles into the locking ratchets which are then locked by the rotary motion of the drive motor for rotating the rollers. By travelling along the y-axis, the manipulator removes the transport container from the transport container slot in the unmanned aerial vehicle. As the next step, the manipulator adjusts its position along the x-axis and, by travelling along the y-axis, places the transport container over the transport trough. Subsequently, by travelling along the z-axis, the manipulator lowers the transport container into the transport trough and the locking ratchets are released by the rotary motion of the spindles, caused by the drive motor for rotating the rollers. The manipulator moves away from the transport trough by travelling along the y-axis, and the transport trough moves from the unloading position to the loading position by travelling along the x-axis.
A mechanism for automatically loading and unloading cargo in an unmanned aerial vehicle having with a transport container, characterised in that the locking ratchets and guide rails of the transport container are attached to the transport container. The transport container is placed on a transport trough equipped with strain gauge beams and feeder guides. The mechanism also has a manipulator consisting of a manipulator arm, a spindle, a set of tensioners, a drive belt, encoder discs, roller position encoders and a drive motor for rotating the rollers. The unmanned aerial vehicle has a transport container slot.

An embodiment of the invention is disclosed in the figures where 1 - shows the unmanned aerial vehicle with the transport container in axonometric view, 2 - shows the unmanned aerial vehicle with the transport trough and manipulator, 3 - shows the transport container with the manipulator arm, 4 - shows the locking ratchets in the locked and unlocked positions.

A mechanism for automatically loading and unloading cargo in an unmanned aerial vehicle has a transport container (1), into which the load is inserted. Fastened to the transport container (1) are locking ratchets (9), in order to prevent the transport container (1) from slipping out, as well as guide rails of the transport container (16) to allow the transport container (1) to be inserted with precision into the transport container slot (18). The transport container (1) is placed on the transport trough (10), which has strain gauge beams (11) for measuring the weight of the load and feeder guides (13) allowing the load to be moved towards the manipulator (14) in order to transfer the transport container (1). The pneumatic actuator (12) is responsible for moving the cargo feeder along the x-axis. The solution also features a manipulator (14) consisting of a manipulator arm (17), a spindle (7), a set of tensioners (4), a drive belt (5), encoder discs (6), roller position encoders (2) as well as a drive motor for rotating the rollers (3). The unmanned aerial vehicle (15) has a transport container slot (18).
For loading, the user places the load inside the transport container (1). Subsequently, when the transport trough (10) has reached the loading position, the user inserts the transport container (1) into the transport trough (10) and confirms the insertion by pressing a button. The transport trough (10) travels along the x-axis to the unloading position through the feeder guides (13) and the pneumatic actuator (12). The manipulator (14) approaches and inserts the spindles (7) into the locking ratchets (9) which are then locked by the rotary motion of the spindles (7), caused by the drive motor for rotating the rollers (3). The manipulator (4) lifts the transport container (1) by travelling along the z-axis and then moves away from the feeder by travelling along the y-axis. As the next step, the manipulator (14) adjusts its position along the x- and z axes, so as to align the transport container (1) with the transport container slot (18) of the UAV (15), and by travelling along the y-axis places the transport container (1) inside the transport container slot (18), whereas the locking ratchets (9) are unlocked by the rotary motion of the spindles (7), caused by the drive motor for rotating the rollers (3). The manipulator (14) moves away from the unmanned aerial vehicle by travelling along the y-axis (15).

For unloading, the manipulator (14) adjusts its position along the x- and z- axes so as to align the spindles (7) with the locking ratchets (9) of the transport container (1) inside the transport container slot (18) in the unmanned aerial vehicle (15). Subsequently, by travelling along the y-axis, the manipulator inserts the spindles (7) into the locking ratchets (19) which are then locked by the rotary motion of the spindles (7), caused by the drive motor for rotating the rollers (3). Subsequently, by travelling along the y-axis, the manipulator (14) removes the transport container (1) from the transport container slot (18) of the UAV (15). As the next step, the manipulator adjusts its position along the x- and z- axes so as to allow for placing the transport container (1) in the transport trough (10), and by travelling along the y-axis, to place the transport container (1) over the transport trough (10). Subsequently, by travelling along the z-axis, the manipulator (14) lowers the transport container (1) into the transport trough (10), and the locking ratchets (19) are released by the rotary motion of the spindles (7), caused by the drive motor for rotating the rollers (3). Then, the manipulator (14) moves away from the transport trough (10) by travelling along the y-axis. By travelling along the x-axis, the transport trough (10) moves from the unloading position to the loading position, from which the user can collect the transport container (10).

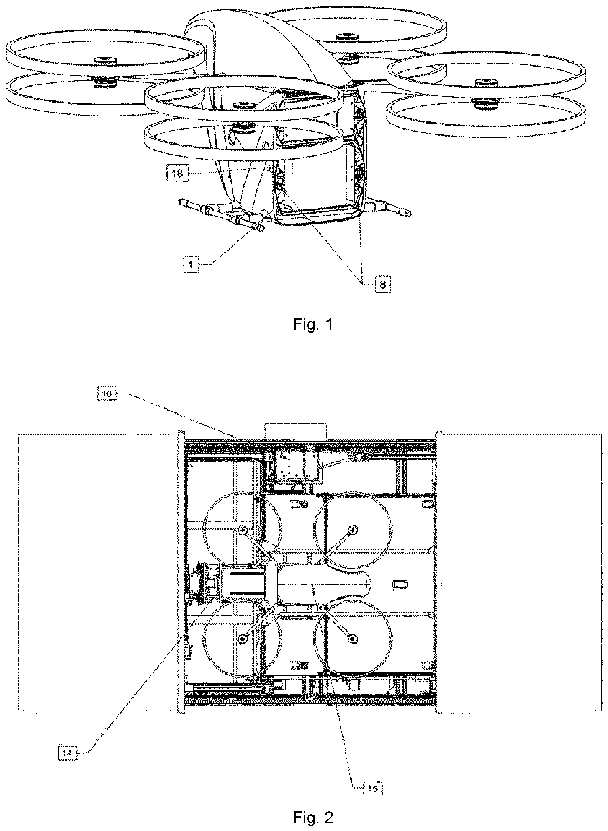

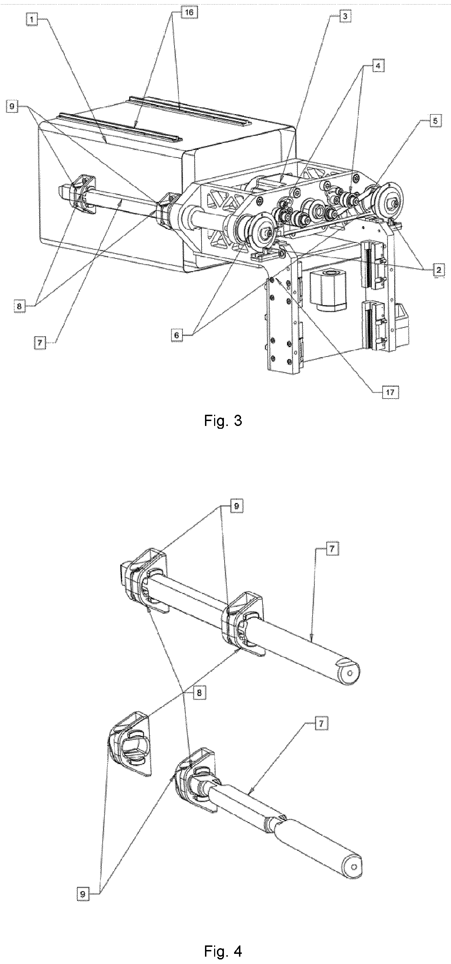

## Claims

1. The method of automatically loading and unloading cargo in an unmanned aerial vehicle, **characteristic in that** the load is placed inside the transport container (1) for loading; subsequently when the transport trough (10) is in the loading position, the transport container (1) is inserted into the transport trough (10) and insertion is confirmed by pressing a button, whereas the transport trough (10) travels along the x-axis to the unloading position through the feeder guides (13) and the pneumatic actuator (12), whereupon the manipulator (14) approaches and inserts the spindles (7) into the locking ratchets (9) which are then locked by the rotary motion of the spindles (7), caused by the drive motor for rotating the rollers (3), and the manipulator (4) lifts the transport container (1) by travelling along the z-axis and then moves away from the feeder by travelling along the y-axis, wherein the manipulator (14) in its next step adjusts its position along the x- and z-axes and, by travelling along the y-axis, places the transport container (1) inside the transport container slot (18), and the locking ratchets (9) are released by the rotary motion of the spindles (7), caused by the drive motor for rotating the rollers (3), whereupon the manipulator (14), by travelling along the y-axis, moves away from the unmanned aerial vehicle (15); for unloading, the manipulator (14) adjusts its position along the x- and z- axes and, by travelling along the y-axis, inserts the spindles (7) into the locking ratchets (9) which are then locked by the rotary motion of the spindles (7), caused by the drive motor for rotating the rollers (3), whereupon the manipulator (14), by travelling along the y-axis, removes the transport container (1) from the transport container slot (18) in the unmanned aerial vehicle (15); in its next step, the manipulator adjusts its position along the x- and z-axes, and by travelling along the y-axis, places the transport container (1) over the transport trough (10), whereupon the manipulator, by travelling along the z-axis, (14) lowers the transport container (1) into the transport trough (10), and the locking ratchets (19) are unlocked by the rotary motion of the spindles (7), caused by the drive motor for rotating the rollers (3), whereupon the manipulator (14), by travelling along the y-axis, moves away from the transport trough (10), and the transport trough (10) moves from the unloading position to the loading position by travelling along the x-axis.

2. A mechanism for automatically loading and unloading cargo in an unmanned aerial vehicle having a transport container, **characteristic in that** locking ratchets (9) and guide rails of the transport container (16) are attached to the transport container (1), wherein the transport container (1) is placed on the transport trough (10) having strain gauge beams (11) and feeder guides (13); furthermore, the mechanism also has a manipulator (14) consisting of a manipulator arm (17), a spindle (7), a set of tensioners (4), a drive belt (5), encoder discs (6), roller position encoders (2) and the drive motor (3) for rotating the rollers, wherein the unmanned aerial vehicle (15) has a transport container slot (18).
